# EUROPÄISCHE PATENTSCHRIFT

(11) **EP 0 435 050 B1**
(45) Veröffentlichungstag und Bekanntmachung des Hinweises auf die Patenterteilung: **16.03.1994**
(21) Anmeldenummer: 90123648.9
(22) Anmeldetag: 08.12.1990
(51) Int. Cl.: A01K 1/015, E04F 15/10

(54) **Bodenplatte aus gummielastischem Material**
Rubber elastic floor plate
Plaque de fond en matière plastique

(30) Priorität: 21.12.1989 DE 8915016 U
(43) Veröffentlichungstag der Anmeldung: 03.07.1991
(73) Patentinhaber: GUMMIWERK KRAIBURG ELASTIK BETEILIGUNGS GMBH & CO., D-84529 Tittmoning (DE)
(72) Erfinder: Irps, Harwig, Dr. Ing., W-3303 Vechelde (DE)
(74) Vertreter: Seidel, Herta, Dipl.-Phys.

(56) Entgegenhaltungen:
- EP-A- 0 081 736
- DE-A- 2 442 331
- DE-A- 3 030 854
- NL-A- 7 701 096

## Beschreibung

Die Erfindung betrifft eine Bodenplatte aus gummielastischem Material mit einer Mehrzahl einander benachbarter Spaltgruppen, die als Auflage auf ein Bodenelement oder auf einen Bodenbelag eines Standplatzes für Tiere in einem Stall dient, wobei die jeder Spaltgruppe zugehörigen Spalten in übereinstimmender Weise in Abständen voneinander angeordnet sind und parallel zueinander verlaufen und das Bodenelement oder der Bodenbelag des Standplatzes eine lagemäßig mit den Spalten der Bodenplatte im wesentlichen übereinstimmende Spaltenordnung aufweist.

Bisher verwendete man für die Herstellung eines Stallbodens im Bereich der Tierstände vorgefertigte Verbundplatten aus Beton und Gummi. Eine Beschädigung der Gummiauflage oder des Betonträgers bedingte aber eine vollständige Erneuerung der entsprechenden Bodenelemente, was sowohl zeit- als auch kostenaufwendig war.
Man legte auch schon Gummimatten mit Löchern und Spalten lose auf den mit Spalten versehenen Stallboden. Diese Gummimatten hatten aber den Nachteil, daß sie im Gebrauch verrutschten. Befestigte man diese Matten aber durch in Betonlöchern angebrachte Dübel, war die Folge eine Verwölbung der Matte bei sich ändernden Temperaturen, die durch die unterschiedlichen Ausdehnungkoiffizienten von Betonunterlage und Gummi bedingt war.

Aus der DE-A- 24 42 331 ist auch bereits ein Fußbodenbelag aus Kunststoff oder Kautschuk bekannt geworden, bei dem eine Oberschicht mit Abflußlöchernin einem Abstand von einer Unterschicht mit Hilfe von Halteelementen befestigt ist, die auf der Unterschicht einstückig mit dieser angeordnete Abstandstücke längs ihrer Umfangsflächen eng umgreifen. Hierdurch soll gewährleistet werden, daß sich die Oberschicht nicht mehr gegenüber der Unterschicht bewegen kann. Es hat sich aber erwiesen, daß eine solche starre Festlegung einer Oberschicht bei der Verwendung als Auflage in einem Stallboden nicht geeignet ist.

Es sollte daher die Aufgabe gelöst werden, unter Vermeidung von Verbundelementen aus Beton und Gummi und unter Vermeidung von verrutschenden losen sowie von starren, mit ihrer Unterlage verbundenen Gummimatten in Standplätzen für Tiere einen Bodenbelag zu schaffen, der zwar mit der Unterlage verbunden ist, aber die Nachteile der bisher bekannten Bodenbeläge nicht aufweist.

Erfindungsgemäß wird dies dadurch erreicht, daß jedem Spalt einer Spaltgruppe jeweils zwei Befestigungsglieder zugeordnet sind, die auf der Unterseite der Bodenplatte, benachbart zu den beiden stirnseitigen Enden des Spaltes angeordnet sind, und daß die Längenabmessungen von Spalt und den beiden Befestigungsgliedern so gewählt sind, daß deren Gesamtlänge etwas kleiner ist als die Länge des Spaltes im Bodenelement oder Bodenbelag des Standplatzes, der bei aufgelegter Bodenplatte lagenmäßig mit dem Spalt der Bodenplatte übereinstimmt, so daß für die in die Spalten des Bodenelements oder des Bodenbelages eingreifenden Befestigungsglieder ein gewisses Spiel zu den stirnseitigen Rändern der Spalten des Bodenelementes bzw. des Bodenbelags bleibt.

Die mit Befestigungsgliedern ausgestattete Bodenplatte schafft die Möglichkeit, die Befestigungsglieder in die Schlitze des Stallbodens oder des Betonspaltbodenelementes einzuschieben. Da man die Gesamtlänge jedes in dem Gummibelag vorhandenen Spaltes und seiner ihm benachbarten Befestigungsglieder kleiner als die Länge der im Betonuntergrund vorhandenen Spalte wählt, erhält man eine gewisse Ausdehnungstoleranz zwischen Beton und Gummi, so daß die bisher nachteiligen Verwölbungen der Betonbelagmatte ausgeschaltet werden können. Darüber hinaus läßt sich die Bodenplatte aus gummielastischem Material ohne Schwierigkeiten zu Reinigungszwecken vom Stallboden entfernen, um Kotplatten und Jaucherinnen säubern zu können. Ferner läßt sich jederzeit bestimmen, welchen Teil des Tierstandes mit der Bodenplatte aus gummielastischem Material belegt werden soll, um die gewünschte Aufstallung der Tiere vornehmen zu können. Auch eine Änderung der verschiedenen Tierstände kann nachträglich durch die mobile Bodenplatte vorgenommen werden.

Es hat sich erwiesen, daß die Ausbildung der Befestigungsglieder als Pyramidenstumpf oder als sich zum freien Ende hin verjüngender Konus die Arbeit mit dem Spaltbodenbelag aus gummielastischem Material erleichtert.

Einzelheiten der Erfindung ergeben sich aus den Ansprüchen und aus der nachstehenden Beschreibung eines Tierstandes anhand der Zeichnung, bei dem eine mit den Merkmalen der Erfindung ausgebildete Bodenplatte auf einen Bodenbelag aufgelegt ist.
Hierin zeigen:
- Fig. 1: eine Draufsicht auf eine neuerungsgemäße Bodenbelagsplatte,

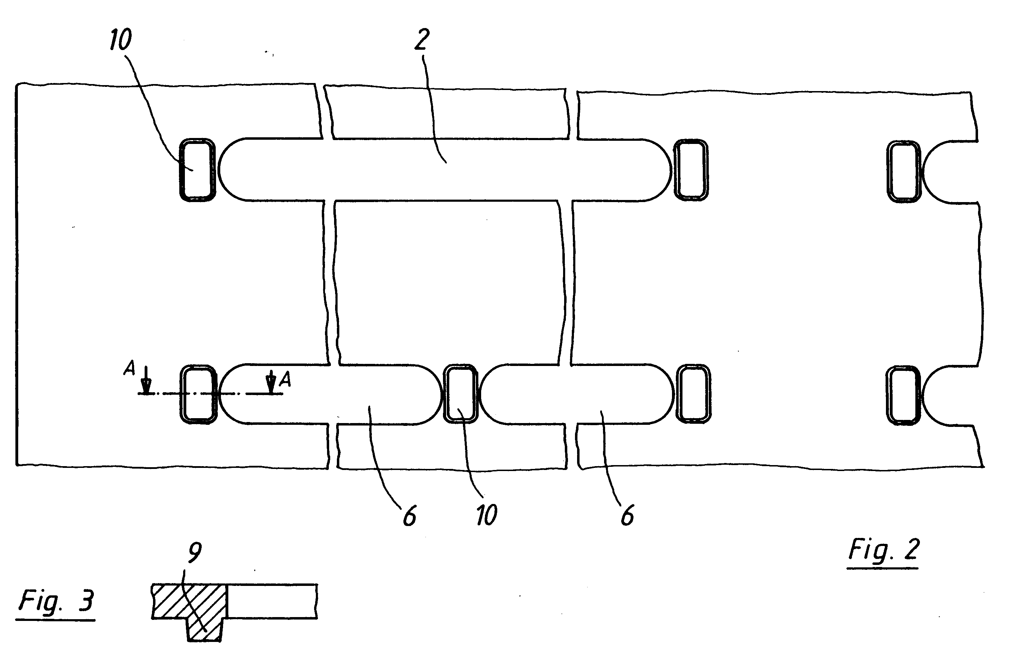

- Fig. 2: eine Unteransicht auf einen Teil einer in Fig.1 gezeigten neuerungsgemäßen Bodenbelagsplatte,
- Fig. 3: einen Schnitt durch einen Teil der Fig. 2 längs der Linie A-A und
- Fig. 4: eine Draufsicht auf einen Betonspaltenboden, auf den die neuerungsgemäße Bodenplatte aufgelegt werden soll.

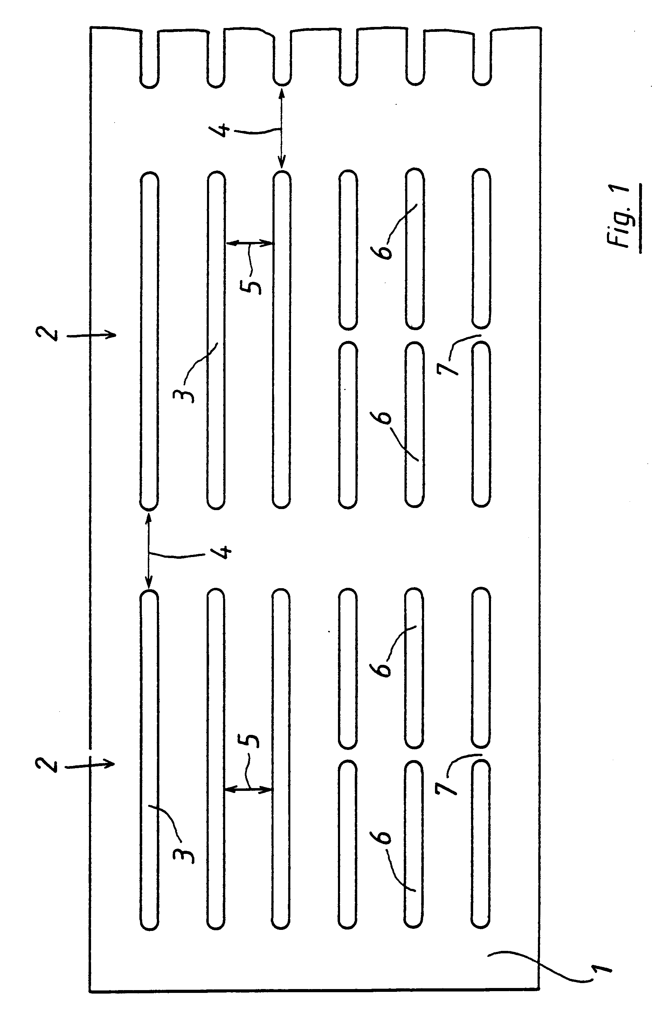

Eine Bodenplatte aus gummielastischem Material 1 ist in Fig. 1 in abgebrochener Darstellung in Draufsicht gezeigt. Die Bodenplatte 1 weist sich über ihre Breite erstreckende Spaltgruppen 2 auf, die ihrerseits aus einer Mehrzahl von in Abständen zueinander verlaufenden, sich in Längsrichtung der Bodenplatte 1 erstreckenden Einzelspalten 3 gebildet sind. Die Längsachsen der in Längsrichtung benachbarten Spalte 3 der einzelnen Gruppen 2 fluchten miteinander. Die Abstände zwischen benachbarten Gruppen 2 bilden Stege 4, die Abstände zwischen benachbarten Spalten 3 einer gemeinsamen Gruppe 2 bilden Stege 5. Die Flächen der Stege 4 und 5 bilden die Auftrittsflächen für die Tiere. Der Schlitzanteil der gesamten Bodenfläche eines Tierstandes beträgt ca. 15 bis 30 %. Die Breite der Spalte 3 wird abhängig von der Tierart, für die der Stand eingerichtet werden soll, gewählt. Sie beträgt etwa 20 bis 40 mm. Bei Rindern werden Spaltbreiten von ca. 30 mm bevorzugt. Die Breite der Stege 5 liegt dann etwa bei 90 mm und die Länge der in Längsrichtung der Bodenbelagsplatte 1 verlaufenden Stege 4 etwa bei 130 mm. Die Länge der einer Gruppe zugeordneten Spalte 3 beträgt dann etwa 600 mm. Es hat sich aber gezeigt, daß eine Teilung jedes Spaltes 3 in zwei Spalten 6 mit je 290 mm Länge unter Bildung eines Zwischensteges 7 einer Länge von ca. 20 mm von Vorteil beim Verlegen der Bodenplatte und deren Befestigung ist.

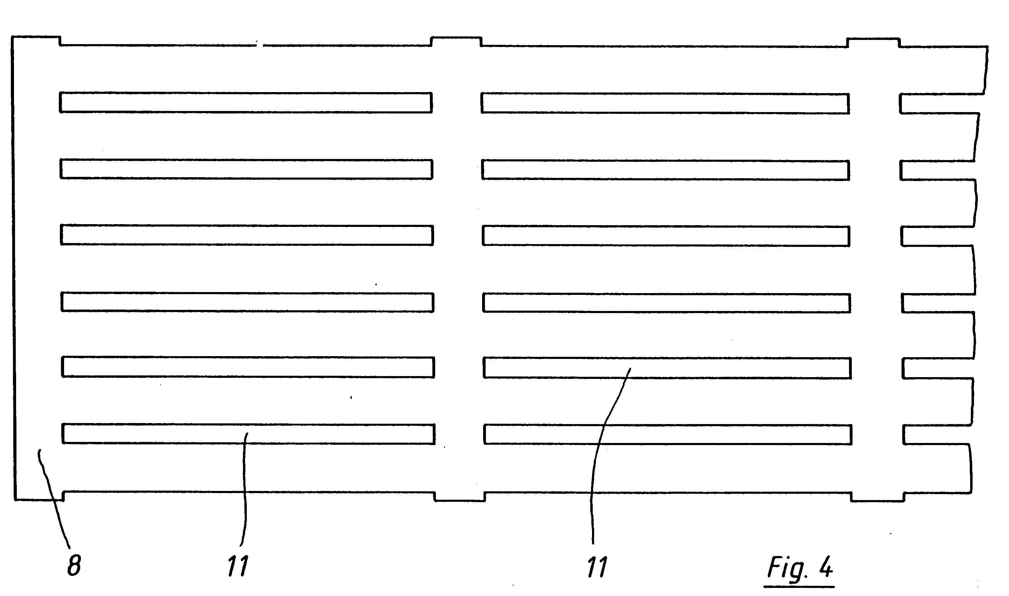

Die Flächenbereiche der Stege 4 sowie der Zwischenstege 7 tragen auf ihrer zur Auflage auf einen Unterboden 8, wie er in Fig. 4 gezeigt ist, dienenden Fläche zapfenartige Befestigungsglieder 9. Die Basisfläche 10 eines Befestigungsgliedes 9 ist hier etwa eine Rechtecksfläche, deren in Plattenlängsrichtung verlaufende Seitenlänge etwa dem Abstand zweier benachbarter Spalte 6, also im Beispiel etwa 20 mm und deren in Plattenquerrichtung verlaufende Seitenlänge der Breite eines Spaltes 3 bzw. 6, also ca. 30 mm entspricht.

Wie aus Fig. 3 zu ersehen, sind die Befestigungsglieder 9 als sich nach unten verjüngende Pyramidenstümpfe ausgebildet. Sie könnten aber, was nicht dargestellt ist, auch ein sich zum freien Ende hin verjüngender Konus sein.

Die vorstehenden Maßangaben für die Spaltlängen und deren Zwischenräume sind lediglich als Beispiel anzusehen, das auf Tierstände für Rinder bezogen ist. Bei der Festlegung der Spaltlängen einer Bodenbelagsplatte ist aber grundsätzlich darauf zu achten, daß die Gesamtlänge jeweils eines Spaltes 3 zusammen mit den diesem Spalt 3 zugeordneten beiden Befestigungsgliedern 9 etwas kleiner gewählt wird, als die Länge der im Unterboden des Stalles oder im Unterbodenelement aus Beton vorliegenden Spalte, um sicherzustellen, daß der erforderliche Spielraum für die bei Temperaturwechsel eintretenden Veränderungen des Bodenbelags vorliegt.

Die Befestigungsglieder 9 werden bei der Bodenmontage in die im Unterboden 8 aus Beton bereits vorgesehenen Spalte 11 eingeschoben. Die Länge der Spalte 11 ist aus den vorstehend erwähnten Gründen größer als die Länge der Spalte 3 der Bodenbelagplatte incl. der zugehörigen Befestigungsglieder 9. Im dargestellten Beispiel beträgt die Länge der Spalte 11 ca. 650 mm, ihr in Längsrichtung des Standes verlaufender Abstand beträgt ca. 80 mm. Im Beispiel beträgt ferner die Länge des Spaltes 3 ca. 600 mm und die jedes angrenzenden Befestigungselement 9 ca. 20 mm.

Hierdurch wird erreicht, daß ein gewisses Spiel, nämlich von ca. 10 mm, für die Befestigungsglieder 9 gewährleistet ist, durch das ein Verwölben der Bodenplatte 1 infolge von Temperaturänderungen ausgeschlossen wird.

Die im Ausführungsbeispiel gezeigte Unterteilung der Spalte 3 in jeweils zwei Spalte 6 mit der Anbringung eines auf deren Zwischensteg 7 angeordneten weiteren Befestigungsgliedes 9 vergrößert die Sicherheit der Auflage der Bodenbelagsplatte 1 auf den Unterboden.

Es hat sich gezeigt, daß die Bodenbelagsplatte aufgrund ihres Eigengewichtes eine stabile und sichere Auflage auf den Betonspaltboden garantiert, obwohl sie als lose Auflage eine einfache Bedienung und Reinigung des Viehstandes zuläßt. Ihre Befestigung mit Hilfe der Befestigungsglieder 9 gewährleistet, daß ein seitliches Verrutschen der Matten im Viehstand auch bei unruhigen Tieren nicht befürchtet werden muß.

## Patentansprüche

1. Bodenplatte (1) aus gummielastischem Material mit einer Mehrzahl einander benachbarter Spaltgruppen (2), die als Auflage auf ein Bodenelement oder auf einen Bodenbelag (8) eines Standplatzes für Tiere in einem Stall dient, wobei die jeder Spaltgruppe (2) zugehörigen Spalten (3,6) in übereinstimmender Weise in Abständen (5) voneinander angeordnet sind und parallel zueinander verlaufen mit einem Bodenelement oder Bodenbelag (8), der eine lagemäßig mit den Spalten (3,6) der Bodenplatte (1) im wesentlichen übereinstimmende Anordnung deren Spalten (11) aufweist, **dadurch ge****kennzeichnet**,
daß jedem Spalt (3,6) einer Spaltgruppe (2) jeweils zwei Befestigungsglieder (9,10) zugeordnet sind, die auf der Unterseite der Bodenplatte (1), benachbart zu den beiden stirnseitigen Enden des Spaltes (3,6) angeordnet sind und daß die Längenabmessungen von Spalt (3,6) und den beiden Befestigungsgliedern (9,10) so gewählt sind, daß deren Gesamtlänge etwas kleiner ist als die Länge des Spaltes (11) im Bodenelement oder Bodenbelag des Standplatzes, der bei aufgelegter Bodenplatte (1) lagenmäßig mit dem Spalt (3,6) der Bodenplatte (1) übereinstimmt, so daß für die in die Spalten (11) des Bodenelemts oder des Bodenbelags eingreifenden Befestigungsglieder (9,10) ein gewisses Spiel zu den stirnseitigen Rändern der Spalten (11) des Bodenelementes bzw. des Bodenbelags bleibt.

2. Bodenplatte nach Anspruch 1 , **dadurch gekenn****zeichnet,** daß das Befestigungsglied (9) als ein sich zu seinem freien Ende hin verjüngender Pyramidenstumpf ausgebildet ist.

3. Bodenplatte nach Anspruch 1, **dadurch gekennzeichnet**, daß das Befestigungsglied (9) als ein sich zu seinem freien Ende hin verjüngender Konus ausgebildet ist, dessen Basisfläche ein Oval ist, dessen große Achse der Spaltbreite und dessen kleine Achse dem Abstand in Plattenlängsrichtung benachbarter Spalte entspricht

4. Bodenplatte nach einem der vorhergehenden Ansprüche, **da****durch gekennzeichnet**, daß einem Spalt (11) des Bodenelements oder des Bodenbelags zwei einander benachbarte, miteinander fluchtende Spalte (6) der Bodenplatte (1) zugeordnet sind, deren sie trennender Zwischensteg (7) ein Befestigungselement (10) trägt.

## Claims

1. Floor slab (1) of flexible rubber material with a plurality of mutually adjacent slotted sections (2), which serve as overlay on a floor element or on a floor covering (8) of a standing area for animals in a stall, in which the slots (3, 6) pertaining to each slotted section (2) are arranged in identical manner with spacings (5) from one another and run parallel to one another with a floor element or floor covering (8) which exhibits an arrangement of its slots (11) that substantially coincides position-wise with the slots (3, 6) of the floor slab, **characterised in that** there are associated with each slot (3, 6) of a slotted section (2) respectively two attachment members (9, 10) which are arranged on the underside of the floor slab (1), adjacent to the two shorter ends of the slot (3, 6), and that the longitudinal dimensions of slot (3, 6) and the two attachment members (9, 10) are selected so that their overall length is somewhat less than the length of the slot (11) in the floor element or floor covering of the standing area, which, with the floor slab (1) superimposed, coincides position-wise with the slot (3, 6) of the floor slab (1), so that there remains for the attachment members (9, 10) engaging with the slots (11) of the floor element or the floor covering a certain clearance relative to the shorter edges of the slots (11) of the floor element or the floor covering.

2. Floor slab according to claim 1, **characterised in that** the attachment member (9) is formed as a truncated pyramid tapering towards its free end.

3. Floor slab according to claim 1, **characterised in that** the attachment member (9) is formed as a cone tapering towards its free end, whose base is an oval, whose main axis matches the slot width and whose minor axis matches the spacing in slab longitudinal direction between adjacent slots.

4. Floor slab according to any one of the preceding claims, **characterised in that** there are associated with a slot (11) of the floor element or the floor covering two mutually adjacent, mutually aligned slots (6) of the floor slab (1), whose intermediate web (7) separating them bears an attachment element (10).

## Revendications

1. Plaque de sol (1) en matière élastique telle que du caoutchouc avec une multiplicité de groupes de fentes voisins les uns des autres (2) qui servent d'assise sur un élément de sol ou un revêtement de sol (8) d'un emplacement pour animaux dans une étable, les fentes (3, 6) correspondant à chaque groupe de fentes (2) étant disposées de façon concordante à des intervalles (5) et s'étendant parallèlement les unes aux autres avec un élément de sol ou un revêtement de sol (8) qui présente une disposition coïncidant sensiblement en position avec les fentes (3, 6) de la plaque de sol (1), plaque de sol caractérisée en ce qu'à chaque fente (3, 6) d'un groupe de fentes (2), sont associés respectivement deux organes de fixation (9, 10) disposés sur le dessous de la plaque de sol (1), au voisinage des deux extrémités de la fente (3, 6) situées du côté frontal, et en ce que les dimensions longitudinales de la fente (3, 6) et des deux organes de fixation (9, 10) sont choisies de telle façon que leur longueur totale soit un peu plus petite que la longueur de la fente (11) dans l'élément de sol ou du revêtement de sol de l'emplacement qui, quand la plaque de sol (1) est posée, coïncide par sa position avec la fente (3, 6) de la plaque de sol (1), de telle sorte que pour les organes de fixation (9, 10) venant en prise dans les fentes (11) de l'élément de sol ou du revêtement de sol, il subsiste un certain jeu de l'élément de sol ou du revêtement de sol par rapport aux bords de la fente (11), situés du côté frontal.

2. Plaque de sol selon la revendication 1, caractérisée en ce que l'organe de fixation (9) est constitué sous la forme d'un tronc de pyramide allant en se rétrécissant vers son extrémité libre.

3. Plaque de sol selon la revendication 1, caractérisée en ce que l'organe de fixation (9) est constitué sous la forme d'un cône allant en se rétrécissant vers son extrémité libre, cône dont la surface de base est un ovale dont le grand axe correspond à la largeur de la fente et dont le petit axe correspond à l'intervalle entre fentes voisines dans le sens longitudinal de la plaque .

4. Plaque de sol selon l'une des revendications précédentes, caractérisée en ce que deux fentes (6) de la plaque de sol (1) qui coïncident l'une avec l'autre et sont voisines l'une de l'autre, sont associées à une fente (11) de l'élément de sol ou du revêtement de sol, dont l'entretoise (7) les séparant porte un élément de fixation (10).
